# EUROPÄISCHE PATENTSCHRIFT

(11) **EP 1 805 433 B1**
(45) Veröffentlichungstag und Bekanntmachung des Hinweises auf die Patenterteilung: **01.07.2009**
(21) Anmeldenummer: 05774122.5
(22) Anmeldetag: 22.08.2005
(51) Int. Cl.: F16H 21/18

(54) **EXZENTERGETRIEBE MIT EINEM UNWUCHTAUSGLEICHSELEMENT**
ECCENTRIC GEAR WITH AN IMBALANCE COMPENSATION ELEMENT
MECANISME A EXCENTRIQUE COMPRENANT UN ELEMENT DE COMPENSATION DE DESEQUILIBRE

(30) Priorität: 19.10.2004 DE 102004050800
(43) Veröffentlichungstag der Anmeldung: 11.07.2007
(73) Patentinhaber: ROBERT BOSCH GMBH, 70442 Stuttgart (DE)
(72) Erfinder: BOHNE, Ulrich, 72664 Kohlberg (DE); LEMMEL, Joerg, 71384 Weinstadt (DE)
(86) Internationale Anmeldenummer: PCT/EP2005/054119
(87) Internationale Veröffentlichungsnummer: WO 2006/042767

(56) Entgegenhaltungen:
- EP-A- 1 025 924
- US-A- 2 639 737
- US-A- 2 746 493
- US-A- 4 344 332
- US-A- 5 022 157
- US-A- 5 134 777

## Beschreibung

### Stand der Technik

Die Erfindung geht aus von einem Exzentergetriebe mit einem Unwuchtausgleichselement.

Es ist bereits vorgeschlagen worden, eine Handwerkzeugmaschine mit einem Exzentergetriebe auszustatten, das zum Übersetzen einer umlaufenden Drehbewegung einer Ankerwelle in eine oszillierende Drehbewegung einer Antriebswelle zum oszillierenden Antreiben eines Einsatzwerkzeugs der Handwerkzeugmaschine vorgesehen ist. Bekannte Exzentergetriebe weisen scheibenförmige Unwuchtausgleichselemente auf, die auf die Antriebswelle aufgesteckt oder aufgepresst sind.

Des Weiteren ist in der Druckschrift US 2,639,737 die den nächstliegenden Stand der Technik represäntiert, eine Handwerkzeugmaschine mit einem Exzentergetriebe vorgeschlagen, das ein einstückig mit einem Unwuchtausgleichselement ausgeführtes Exzenterelement aufweist. Das Exzenterelement setzt eine umlaufende Drehbewegung einer Ankerwelle in eine oszillierende Hubbewegung bzw. Linearbewegung eines Werkzeughalters, in dem ein Werkzeug gelagert ist, um.

### Vorteile der Erfindung

Es wird ein Exzentergetriebe mit einem Unwuchtausgleichselement und mit einem Exzenterelement zum Übersetzen einer umlaufenden Drehbewegung einer Ankerwelle in eine oszillierende Drehbewegung einer Antriebswelle zum oszillierenden Antreiben eines Einsatzwerkzeugs einer Handwerkzeugmaschine vorgeschlagen, wobei das Unwuchtausgleichselement mit einer weiteren Funktionseinheit einstückig ausgeführt ist. Dadurch können Bauteile und Produktionskosten eingespart werden, und eine Robustheit des Exzentergetriebes kann gesteigert werden. Fehlerquellen in einem Montageprozess können zudem vorteilhaft eliminiert werden.

Als Exzenterelement soll eine Vorrichtung mit einer relativ zu einer Drehachse exzentrisch angeordneten Mitnahmeeinheit, insbesondere einem Mitnahmebolzen, bezeichnet werden, das besonders vorteilhaft zwei parallel zueinander verschobene Achsen aufweisen kann. Das Unwuchtausgleichselement erzeugt eine Ausgleichsunwucht, die einer vom Exzenterelement und damit verbundenen, exzentrisch kreisenden Bauteilen erzeugten Unwucht entgegengesetzt ist und diese daher kompensiert.

Dabei kann insbesondere ein Fehler in der relativen Orientierung von Exzenterelement und Unwuchtausgleichselement vermieden werden, wenn die weitere Funktionseinheit das Exzenterelement ist.

Eine kostengünstige Herstellung des Unwuchtelements ist erreichbar, wenn das Unwuchtausgleichselement eine Ausnehmung umfasst. Dabei kann das Unwuchtausgleichselement insbesondere als drehsymmetrisches Bauteil ausgebildet sein, in das nachträglich zum Erzeugen einer Unwucht die Ausnehmung eingebracht ist. Weist das Exzenterelement einen Mitnahmebolzen auf, kann die Ausnehmung in die gleiche Richtung wie der Mitnahmebolzen orientiert sein. Eine besonders präzise Dimensionierung der Unwucht ist erreichbar, wenn das Unwuchtausgleichselement eine Bohrung umfasst. Dadurch kann zudem eine geräuscharme Bewegung des Unwuchtausgleichselements erreicht werden, wenn dieses einen rotationssymmetrischen Außenmantel aufweist, der die - insbesondere axial gerichtete - Bohrung überdeckt.

Kanten, die Laufgeräusche erzeugen könnten, können vermieden werden, und eine besonders kompakte Bauweise kann erreicht werden, wenn das Unwuchtausgleichselement von einem Außenmantel des Exzenterelements gebildet ist. Dies kann besonders vorteilhaft durch eine relativ zu einer Drehachse des Exzenterelements bzw. zu einem Mitnahmeelement parallel verschobene Achse des Außenmantels realisiert sein.

Ein senkrecht zur Drehachse des Exzenterelements bzw. der Ankerwelle verlaufendes Kippmoment kann vorteilhaft kompensiert werden, wenn eine Achse des Außenmantels relativ zu wenigstens einer Achse des Exzenterelements verkippt ist.

Ein kostengünstiges Exzentergetriebe mit einer Kompensation von senkrecht zur Drehachse gerichteten Komponenten eines Drehmoments bzw. eines Kippmoments ist erreichbar, wenn das Unwuchtausgleichselement einen sich in axialer Richtung verändernden Querschnitt aufweist. Dabei kann ein besonders präzise abgestimmtes Unwuchtausgleichselement erreicht werden, wenn das Unwuchtausgleichselement zumindest zwei axial versetzte Bereiche mit unterschiedlicher Unwucht aufweist.

Ferner sind Ausgestaltungen der Erfindung denkbar, in denen die weitere Funktionseinheit, die einstückig mit dem Unwuchtausgleichselement ausgeführt ist, die Ankerwelle ist. Dadurch kann ein kostengünstig herstellbares Exzenterelement mit hoher Symmetrie erreicht werden.

Mit besonders geringem Konstruktionsaufwand ist ein wirkungsvolles Unwuchtausgleichselement erreichbar, wenn das Unwuchtausgleichselement eine seitliche Abflachung der Ankerwelle umfasst.

Es sind auch Ausgestaltungen der Erfindung denkbar, in denen mehrere getrennte Unwuchtausgleichselemente, die in unterschiedliche Funktionseinheiten integriert sind, vorgesehen sind. Eine relative Orientierung der Unwuchtausgleichselemente kann dabei vorteilhaft so gewählt sein, dass ein Kippmoment kompensiert ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer oszillierend antreibbaren Antriebswelle,
- Fig. 2: ein Exzentergetriebe der Handwerkzeugmaschine aus Figur 1,
- Fig. 3a - 3c: ein Exzenterelement des Exzentergetriebes aus Figur 2 in einer Ansicht von vorn, in einer Schnittdarstellung und in einer Ansicht von hinten,
- Fig. 4a - 4c: ein alternatives Exzenterelement eines Exzentergetriebes in einer Ansicht von vorn, in einer Schnittdarstellung und in einer Ansicht von hinten,
- Fig. 5a - 5c: ein weiteres alternatives Exzenterelement eines Exzentergetriebes in einer Ansicht von vorn, in einer Schnittdarstellung und in einer Ansicht von hinten,
- Fig. 6a - 6c: ein weiteres alternatives Exzenterelement eines Exzentergetriebes in einer Ansicht von vorn, in einer Schnittdarstellung und in einer Ansicht von hinten und
- Fig. 7: ein weiteres alternatives Exzenterelement und eine Ankerwelle mit integriertem Unwuchtausgleichselement.

### Beschreibung der Ausführungsbeispiele

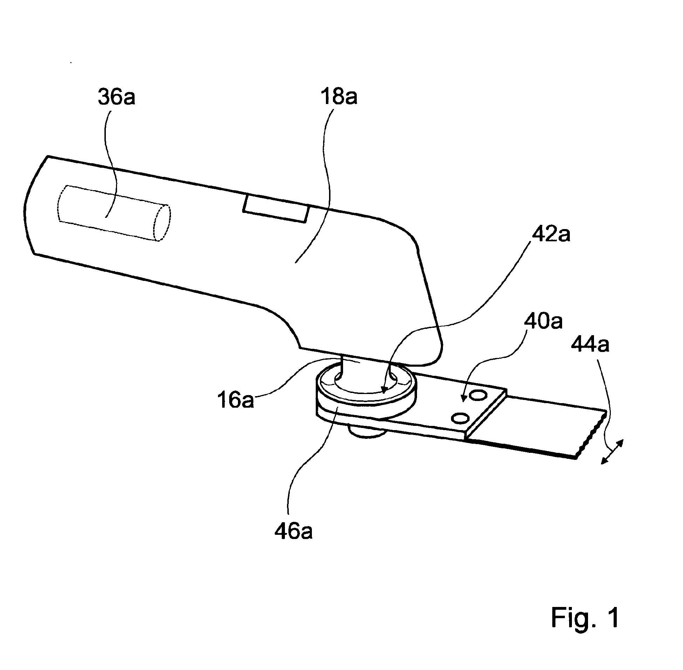

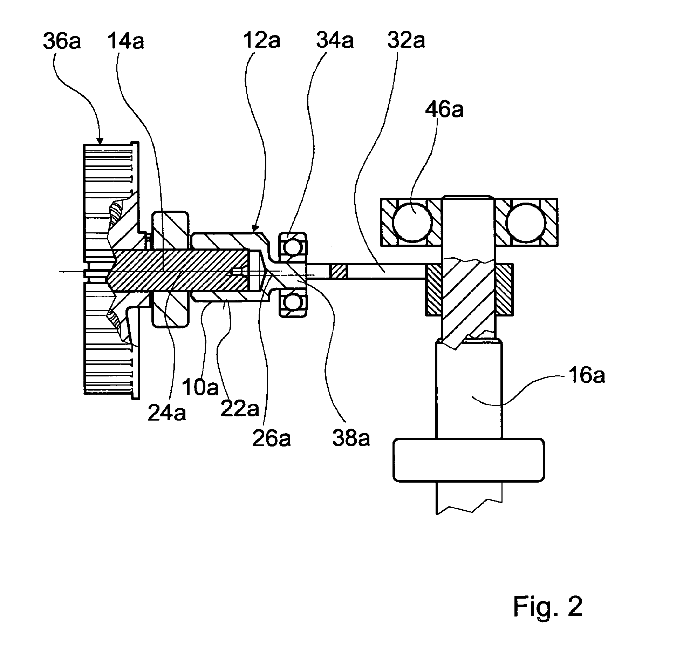

Figur 1 zeigt eine Handwerkzeugmaschine 18a mit einem in einem Gehäuse angeordneten Elektromotor 36a (Figur 2). Der Elektromotor 36a treibt über ein Exzentergetriebe eine aus dem Gehäuse herausragende Antriebswelle 16a oszillierend an. Im Betrieb schwenkt die Antriebswelle 16a oszillierend um einige Grad hin und her. An dem aus dem Gehäuse herausragenden Ende weist die Antriebswelle 16a eine Befestigungsvorrichtung 42a auf, an der ein Einsatzwerkzeug 40a drehfest befestigbar ist. Dabei wirkt die Befestigungsvorrichtung 42a in axialer Richtung als Klemmverbindung. Die oszillierende Bewegung der Antriebswelle 16a überträgt sich in eine oszillierende Schwenkbewegung 44 des Einsatzwerkzeugs 40a.

Figur 2 zeigt das Exzentergetriebe der Handwerkzeugmaschine 18a. Auf eine Ankerwelle 14a des Elektromotors 36a ist ein Exzenterelement 12a zum Übersetzen der umlaufenden, vom Elektromotor 36a erzeugten Drehbewegung der Ankerwelle 14a in die oszillierende Drehbewegung der Antriebswelle 16a aufgepresst.

Das Exzenterelement 12a weist einen hinteren Bereich mit einer Bohrung auf, die zur Aufnahme eines Endes der Ankerwelle 14a vorgesehen ist. In einem vorderen Bereich weist das Exzenterelement 12a einen zylindrischen Mitnahmezapfen 38a auf. Eine Achse 26a des Mitnahmezapfens 38a ist exzentrisch bzw. parallel verschoben zu einer Achse 24a der Bohrung angeordnet, so dass eine Drehbewegung der Ankerwelle 14a eine exzentrische Drehbewegung des Mitnahmezapfens 38a erzeugt.

Auf den Mitnahmezapfen 38a ist ein Kugellager 34a aufgesteckt. Eine Schwinge 32a des Exzentergetriebes ist gabelförmig ausgebildet, liegt beidseitig an einem Außenumfang des Kugellagers 34a an und ist drehfest mit der Antriebswelle 16a verbunden. Eine orbitale Bewegung des Kugellagers 34a erzeugt eine oszillierende Schwenkbewegung der Schwinge 32a. Die Schwenkbewegung der Schwinge 32a überträgt sich auf die über ein Kugellager 46a im Gehäuse der Handwerkzeugmaschine 18a gelagerte Antriebswelle 16a und von dieser auf die Schwenkbewegung 44a des Einsatzwerkzeugs 40a.

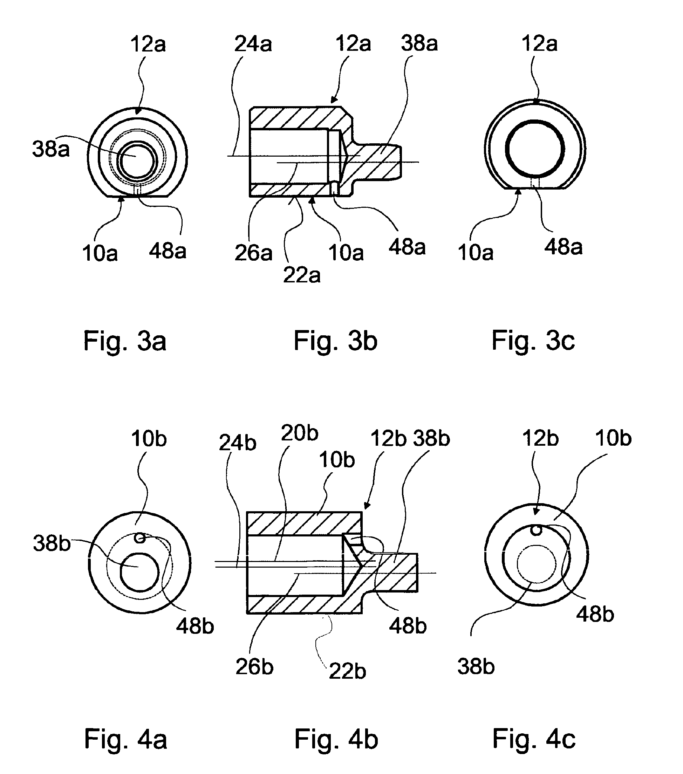

Das Exzenterelement 12a weist eine als Abflachung ausgebildete Ausnehmung auf, die ein Unwuchtausgleichselement 10a bildet und einstückig mit dem Exzenterelement 12a ausgeführt ist (Figuren 3a - 3c). Das Unwuchtausgleichselement 10a ist in die Richtung ausgerichtet, in der der Mitnahmezapfen 38a aus der Achse 24a verschoben ist. Das Unwuchtausgleichselement 10a ist so dimensioniert, dass ein Massenschwerpunkt eines aus dem Exzenterelement 12a und dem Kugellager 34a bestehenden Gesamtsystems auf der Achse 24a der Ankerwelle 14a liegt.

Im Bereich einer Stirnseite der Bohrung im hinteren Bereich des Exzenterelements 12a weist das Exzenterelement 12a eine Luftausgleichsöffnung 48a auf, durch die während eines Aufpressvorgangs des Exzenterelements 12a auf die Ankerwelle 14a Luft aus der Bohrung entweichen kann.

Die Figuren 4 - 6 zeigen alternative Ausgestaltungen eines Exzenterelements 12a - 12e mit einem integrierten Unwuchtausgleichselement 10a - 10e. In der Beschreibung soll im Wesentlichen auf Unterschiede zu dem in den Figuren 1 - 3 dargestellten Ausführungsbeispiel eingegangen werden, während im Hinblick auf gleich bleibende Merkmale auf die Beschreibung zu den Figuren 1 - 3 verwiesen werden kann. Analoge Merkmale sind mit gleichen Bezugszeichen versehen, wobei zur Unterscheidung der Ausführungsbeispiele die Buchstaben a - e hinzugefügt sind.

Die Figuren 4a - 4c zeigen ein Exzenterelement 12b mit einem einstückig mit dem Exzenterelement 12b ausgebildeten Unwuchtausgleichselement 10b. Das Unwuchtausgleichselement 10b ist von einem zylindrischen Außenmantel 22b des Exzenterelements 12b gebildet, dessen Achse 20b parallel zu der Achse 24b verschoben ist, und zwar in eine der Richtung einer Achse 26b eines Mitnahmezapfens 38b entgegengesetzte Richtung. Durch das Verschieben der Achse 20b verlagert sich ein Massenschwerpunkt auf die Achse 24b.

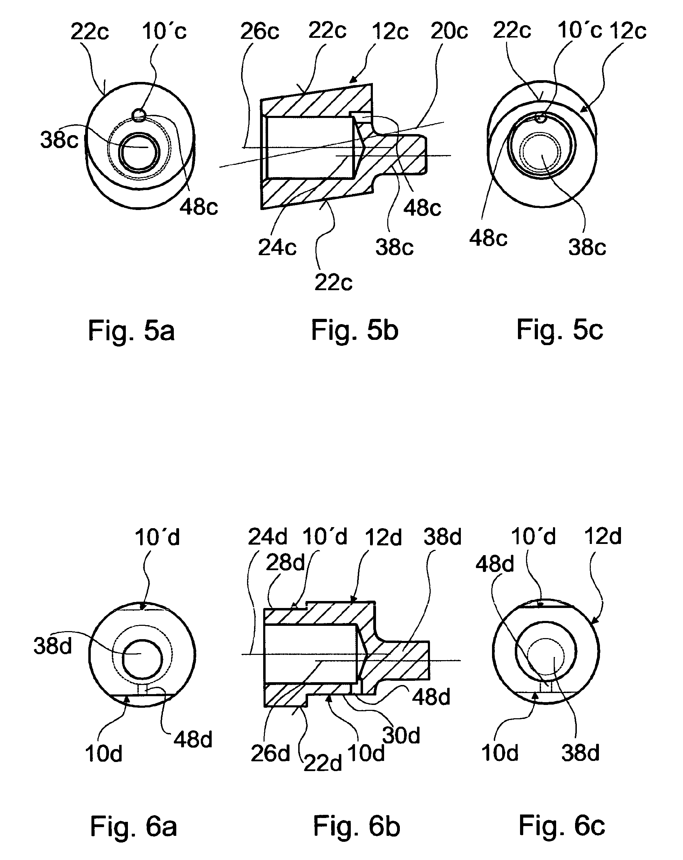

Die Figuren 5a - 5c zeigen ein Exzenterelement 12c mit einem einstückig mit dem Exzenterelement 12c ausgebildeten Unwuchtausgleichselement 10c. Das Unwuchtausgleichselement 10c ist von einem zylindrischen Außenmantel 22c des Exzenterelements 12c gebildet, dessen Achse 20c relativ zu der Achse 24c einer Ankerwelle 14c und zu einer Achse 26c eines Mitnahmezapfes 38c des Exzenterelements 12c verkippt ist. Durch das Verkippen wird sowohl ein Massenschwerpunkt auf die Achse 24c verlagert als auch ein durch den Mitnahmezapfen 38c erzeugtes, senkrecht zur Achse 24c gerichtetes Kippmoment kompensiert.

Die Figuren 6a - 6c zeigen ein weiteres alternatives Exzenterelement 12d mit einem einstückig mit dem Exzenterelement 12d ausgebildeten Unwuchtausgleichselement 10d. Das Unwuchtausgleichselement 10d weist einen sich in axialer Richtung verändernden Querschnitt auf (Figur 6b). Das Unwuchtausgleichselement 10d umfasst zwei axial versetzte Bereiche 28d, 30d, die jeweils eine Abflachung eines im Übrigen kreisförmigen Querschnitts des Exzenterelements 12d bilden. Die Abflachungen der Bereiche 28d, 30d sind gegenüberliegend und erzeugen ein Kippmoment, das ein senkrecht zu einer Achse 24d einer zur Aufnahme einer Ankerwelle 14d vorgesehenen Bohrung gerichtetes Kippmoment erzeugt, das ein von einem Mitnahmezapfen 38d des Exzenterelements 12d erzeugtes Kippmoment in mehreren Ebenen kompensiert. Die Bereiche 28d, 30d weisen jeweils eine unterschiedliche Unwucht auf, die entgegengesetzt ausgerichtet und von unterschiedlichem Betrag ist.

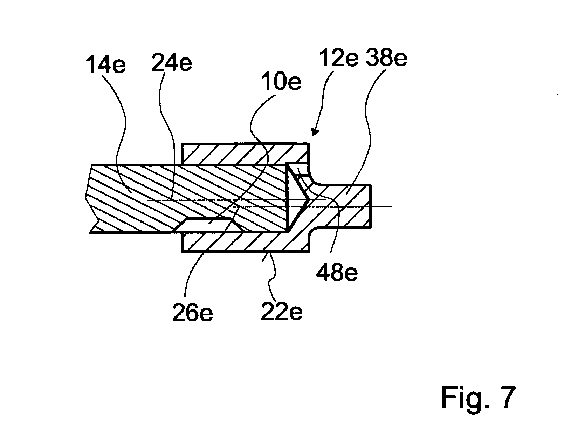

Figur 7 zeigt eine weitere Ausgestaltung der Erfindung, die ein einstückig mit einer Ankerwelle 14e ausgebildetes Unwuchtausgleichselement 10e aufweist. Das Unwuchtausgleichselement 10e ist als seitliche Abflachung der Ankerwelle 14e ausgebildet.

## Patentansprüche

1. Exzentergetriebe mit einem Unwuchtausgleichselement (10a - 10e) und mit einem Exzenterelement (12a - 12e) zum Übersetzen einer umlaufenden Drehbewegung einer Ankerwelle (14a - 14e) in eine oszillierende Drehbewegung einer Antriebswelle (16a - 16e) zum oszillierenden Antreiben eines Einsatzwerkzeugs (40a - 40e) einer Handwerkzeugmaschine (18a - 18e), wobei das Unwuchtausgleichselement (10a - 10e) mit einer weiteren Funktionseinheit (12a - 12d, 14e) einstückig ausgeführt ist.

2. Exzentergetriebe nach Anspruch 1, **dadurch gekennzeichnet, dass** die weitere Funktionseinheit das Exzenterelement (12a - 12d) ist.

3. Exzentergetriebe nach einem der vorhergehenden Ansprüche, **dadurch gekennzeichnet, dass** das Unwuchtausgleichselement (10a, 10d, 10e) eine Ausnehmung umfasst.

4. Exzentergetriebe nach einem der vorhergehenden Ansprüche, **dadurch gekennzeichnet, dass** das Unwuchtausgleichselement (10b, 10c) von einem Außenmantel (22b, 22c) des Exzenterelements (12b, 12c) gebildet ist.

5. Exzentergetriebe nach Anspruch 4, **dadurch gekennzeichnet, dass** eine Achse (20c) des Außenmantels (22c) relativ zu wenigstens einer Achse (24c, 26c) des Exzenterelements (12c) verkippt ist.

6. Exzentergetriebe nach einem der vorhergehenden Ansprüche, **dadurch gekennzeichnet, dass** das Exzenterelement (12a - 12e) zum Aufpressen auf die Ankerwelle (14a - 14e) vorgesehen ist.

7. Exzentergetriebe nach einem der vorhergehenden Ansprüche, **dadurch gekennzeichnet, dass** das Unwuchtausgleichselement (10d) einen sich in axialer Richtung verändernden Querschnitt aufweist.

8. Exzentergetriebe nach einem der vorhergehenden Ansprüche, **dadurch gekennzeichnet, dass** das Unwuchtausgleichselement (10d) zumindest zwei axial versetzte Bereiche (28d, 30d) mit unterschiedlicher Unwucht aufweist.

9. Exzentergetriebe nach Anspruch 1, **dadurch gekennzeichnet, dass** die weitere Funktionseinheit die Ankerwelle (14e) ist.

10. Exzentergetriebe nach Anspruch 9, **dadurch gekennzeichnet, dass** das Unwuchtausgleichselement (10e) eine Ausnehmung in der Ankerwelle (14e) umfasst.

11. Exzentergetriebe nach Anspruch 10, **dadurch gekennzeichnet, dass** das Unwuchtausgleichselement (10e) eine seitliche Abflachung der Ankerwelle (14e) umfasst.

12. Handwerkzeugmaschine mit einem Exzentergetriebe nach einem der vorhergehenden Ansprüche.

## Claims

1. Eccentric drive having an unbalance compensation element (10a-10e) and having an eccentric element (12a-12e) for converting a revolving rotary movement of an armature shaft (14a-14e) into an oscillating rotary movement of a drive shaft (16a-16e) for driving an application tool (40a-40e) of a portable power tool (18a-18e) in an oscillating manner, the unbalance compensation element (10a-10e) being designed in one piece with another functional unit (12a-12d, 14e).

2. Eccentric drive according to Claim 1, **characterized in that** the other functional unit is the eccentric element (12a-12d).

3. Eccentric drive according to either of the preceding claims, **characterized in that** the unbalance compensation element (10a, 10d, 10e) comprises a recess.

4. Eccentric drive according to one of the preceding claims, **characterized in that** the unbalance compensation element (10b, 10c) is formed by an outer lateral surface (22b, 22c) of the eccentric element (12b, 12c).

5. Eccentric drive according to Claim 4, **characterized in that** an axis (20c) of the outer lateral surface (22c) is tilted relative to at least one axis (24c, 26c) of the eccentric element (12c).

6. Eccentric drive according to one of the preceding claims, **characterized in that** the eccentric element (12a-12e) is intended for pressing onto the armature shaft (14a-14e).

7. Eccentric drive according to one of the preceding claims, **characterized in that** the unbalance compensation element (10d) has a cross section varying in the axial direction.

8. Eccentric drive according to one of the preceding claims, **characterized in that** the unbalance compensation element (10d) has at least two axially offset regions (28d, 30d) having different unbalance.

9. Eccentric drive according to Claim 1, **characterized in that** the other functional unit is the armature shaft (14e).

10. Eccentric drive according to Claim 9, **characterized in that** the unbalance compensation element (10e) has a recess in the armature shaft (14e).

11. Eccentric drive according to Claim 10, **characterized in that** the unbalance compensation element (10e) comprises a lateral flat of the armature shaft (14e).

12. Portable power tool having an eccentric drive according to one of the preceding claims.

## Revendications

1. Mécanisme à excentrique comprenant un élément de compensation de déséquilibre (10a - 10e) et un élément d'excentrique (12a - 12e) pour convertir un mouvement de rotation continu d'un arbre d'induit (14a - 14e) en un mouvement de rotation oscillant d'un arbre d'entraînement (16a - 16e) pour l'entraînement oscillant d'un outil (40a-40e) d'une machine-outil manuelle (18a - 18e), l'élément de compensation de déséquilibre (10a - 10e) étant réalisé d'une seule pièce avec une autre unité fonctionnelle (12a, 12d, 14e).

2. Mécanisme à excentrique selon la revendication 1, **caractérisé en ce que** l'autre unité fonctionnelle est l'élément d'excentrique (12a - 12d).

3. Mécanisme à excentrique selon l'une quelconque des revendications précédentes, **caractérisé en ce que** l'élément de compensation de déséquilibre (10a, 10d, 10e) comprend un évidement.

4. Mécanisme à excentrique selon l'une quelconque des revendications précédentes, **caractérisé en ce que** l'élément de compensation de déséquilibre (10b, 10c) est formé par une enveloppe extérieure (22b, 22c) de l'élément d'excentrique (12b, 12c).

5. Mécanisme à excentrique selon la revendication 4, **caractérisé en ce qu'**un axe (20c) de l'enveloppe extérieure (22c) est basculé par rapport à au moins un axe (24c, 26c) de l'élément d'excentrique (12c).

6. Mécanisme à excentrique selon l'une quelconque des revendications précédentes, **caractérisé en ce que** l'élément d'excentrique (12a - 12e) est prévu pour presser sur l'arbre d'induit (14a - 14e).

7. Mécanisme à excentrique selon l'une quelconque des revendications précédentes, **caractérisé en ce que** l'élément de compensation de déséquilibre (10d) présente une section transversale variant dans la direction axiale.

8. Mécanisme à excentrique selon l'une quelconque des revendications précédentes, **caractérisé en ce que** l'élément de compensation de déséquilibre (10d) présente au moins deux régions décalées axialement (28d, 30d) avec un déséquilibre différent.

9. Mécanisme à excentrique selon la revendication 1, **caractérisé en ce que** l'autre unité fonctionnelle est l'arbre d'induit (14e).

10. Mécanisme à excentrique selon la revendication 9, **caractérisé en ce que** l'élément de compensation de déséquilibre (10e) comprend un évidement dans l'arbre d'induit (14e).

11. Mécanisme à excentrique selon la revendication 10, **caractérisé en ce que** l'élément de compensation de déséquilibre (10e) comprend un aplatissement latéral de l'arbre d'induit (14e).

12. Machine-outil manuelle comprenant un mécanisme à excentrique selon l'une quelconque des revendications précédentes.
